# EUROPEAN PATENT SPECIFICATION

(11) **EP 1 159 381 B1**
(45) Date of publication and mention of the grant of the patent: **28.01.2004**
(21) Application number: 00911462.0
(22) Date of filing: 16.03.2000
(51) Int. Cl.: C11B 3/00, A23L 1/015

(54) **METHOD FOR MANUFACTURING REFINED FISH OIL**
EINE METHODE ZUR HERSTELLUNG VON VERFEINERTEM FISCH-ÖL
PROCEDE DE FABRICATION D'HUILE DE POISSON RAFFINEE

(30) Priority: 13.12.1999 KR 9957190
(43) Date of publication of application: 05.12.2001
(73) Proprietor: Lee, Sang Hak, Pohang 790-350 (KR); Lee, Joo Yeon, Chungjoo 361-302 (KR)
(72) Inventor: Lee, Sang Hak, Pohang 790-350 (KR); Lee, Joo Yeon, Chungjoo 361-302 (KR)
(74) Representative: Alexander, Thomas Bruce
(86) International application number: PCT/KR2000/000219
(87) International publication number: WO 2001/042403

(56) References cited:
- US-A- 5 693 358
- US-A- 5 840 945
- DATABASE WPI Week 199341, Derwent Publications Ltd., London, GB; AN 1993-325934, XP002948971 & KR 9 300 779 B (LEE S) 04 February 1993
- DATABASE WPI Week 198012, Derwent Publications Ltd., London, GB; AN 1980-21212C, XP002948972 & JP 55 019 165 A (EGUCHI S.) 09 February 1980
- PATENT ABSTRACTS OF JAPAN & JP 02 069 157 A (NIPPON KAGAKU SHIRYO KK) 08 March 1990
- DATABASE WPI Week 199722, Derwent Publications Ltd., London, GB; AN 1997-236338, XP002948973 & CN 1 098 874 A (ZHAO Y.) 22 February 1995
- DATABASE WPI Week 199402, Derwent Publications Ltd., London, GB; AN 1994-014007, XP002948974 & KR 9 305 193 B (KIM D. ET AL.) 16 June 1993

## Description

### Technical Field

The present invention relates to a method for manufacturing refined fish oil for use as a health subsidiary food.

### Background Art

Extensive and steady research has found novel values from omega 3 fatty acids, including EPA (eicosa pentaenoic acid) and DHA (docosa hexaenoic acid), both found uniquely in fish oil, and they are now recognized as being highly valuable to the health of the body. A workshop on omega 3 and omega 6 fatty acids was held in Italy, 1988, under the supervision of Nutritional Science Section, International Biotechnology Institute of North Atlantic Treaty Organization (NATO), in which 120 scientists from 15 countries reached a consensus that omega 3 fatty acid should be supplied appropriately to the body and has a function of lowering cholesterol levels in blood in addition to being useful for anti-blood coagulation, anti-inflammation and rheumatoid arthritis treatment.

As mentioned, omega 3 fatty acid, which is contained in fish oil, is regarded as an essential fatty acid necessary to keep humans healthy. To be processed to a food or foodstuff, however, fish oil should typically be refined and deodorized on account of its characteristic offensive odor and ready liability to deterioration. In this regard, high techniques using expensive special apparatuses or high cost fermenting methods are used, so that an increase occurs in the production cost of refined fish oil, standing in the way of providing omega 3 fatty acid to many people at low costs.

The applicant has suggested an economically favorable method in removing fish odor and the utilization method of the deodorized fish oil as animal feed in Korean Patent Publication No. 93-779 entitled "A deodorization processing method of fish oil using mono sodium glutamate (MSG) by-product," which was matured into Korean Pat. No. 062232 on May 25, 1993, and Korean Patent No. 123840 entitled "Animal feed manufacturing method based on fish oil," yielded on Sep. 19, 1997, respectively.

In Korean Pat. Publication No. 93-779, it is described that an MSG by-product is mixed to fish oil together with water in order to remove phospholipid which is a main cause of fish smell contained in the fish oil. Then, the mixed resultant is heated to transpose oil-soluble phospholipids of the fish oil into water-soluble ones by means of water soluble protein in the MSG. The transposed water-soluble phospholipid is separated from the fish oil by a separation method, thereby floating its fat to an upper portion of the pure fish oil. If the floated fat is removed, the phospholipid contained in the fish oil is effectively eradicated.

The fish oil from which the phospholipid is removed is pre-heated at the atmosphere of vacuum. The odor of the fish oil is removed by water evaporation at the atmosphere of vacuum, to eliminate unsaturated fatty acid. Then, the unsaturated fatty acid is cooled to complete a separation process. Thereafter, since a peroxide value (POV) is not more than 10 milimol per kilogram even though about three weeks elapse, the bad smell is not generated.

As described above, since the MSG by-product is added to the fish oil to remove the phospholipid, and then the pre-heating, the deodorization and the cooling processes at the atmosphere of vacuum lower the degree of degeneration, the deodorization of the smell of the fish oil can be accomplished at an extremely low cost and through a simple process. Also, the low POV can be maintained for a long time, the fish oil can be kept for a long time.

Disclosed in Korean Pat. No. 123840 (corresponding to U.S. Pat. No. 5,693,358, yielded on Dec. 2, 1997) is a method for powdering the fish oil obtained from the above method. The method comprises heating a mixture of fish oil with water and an MSG by-product with stirring, reacting the mixture at an elevated temperature in the presence of urea as a catalyst with stirring and fermenting the mixture with steams, separately eradicating water and phospholipids from the fermented fish oil, and powdering the fish oil by adding quicklime, cooling, saponification, salting-out and rolling. After being mixed with animal feed, the powdered quicklime-added fish oil is provided for poultry.

When the resulting animal feed is provided to egg-laying hens, there can be obtained eggs whose yolks contain EPA and DHA. Chickens or pigs which are bred with the feed provide chicken meat or pork transposed by omega 3 fatty acids, such as EPA and DHA. Feeding of the feed to milk cows results in the production of the milk containing omega 3 fatty acid such as DHA at relatively low costs.

Since DHA is known to play an important role in improving retina reflex and intelligence development, the provision of such omega 3 fatty acids is helpful in ensuring children to have sound bodies and improved intelligence.

### Disclosure of Invention

Based on the deodorization process of fish oil described in the above-mentioned patents, the present invention pertains to the manufacture of refined fish oil for use as a health subsidiary food.

Therefore, it is an object of the present invention to provide a method for manufacturing refined fish oil completely deprived of fish odor.

It is another object of the present invention to provide a method for manufacturing refined fish oil which is highly stable and preservable for a long period of time.

It is a further object of the present invention to provide a method for manufacturing refined fish with which omega 3 fatty acids, including EPA and DHA, can be readily provided for humans.

In the present invention, the starting material is the refined fish oil obtained according to the preceding patents of the present inventor. That is, a mixture of fish oil, water and an MSG by-product is heated with stirring and fermented at a high temperature for a predetermined period of time in the presence of urea as a catalyst with steaming, followed by removing phospholipid components and aqueous components from the fish oil in a centrifuge to give the starting material. Introduction of the process of the present invention into this refined fish oil gives more refined fish oil which is completely deprived of fish odor and can be preserved for a long period of time.

In one embodiment of the present invention, there is provided a method for manufacturing refined fish oil, comprising the steps of: preparing phospholipid-deprived fish oil by mixing fish oil with water and a monosodium glutamate (MSG) by-product with stirring at a heated temperature, fermenting the mixture at an elevated temperature for a period of time in the presence of urea, processing the mixture with steam, and centrifuging the mixture to separate water and phospholipids from the fish oil, said urea serving as a catalyst; measuring acid value of the separated fish oil to neutralize the fish oil with NaOH, washing the de-acidified fish oil with warm water, and drying the washed fish oil in vacuum; mixing the dehydrated fish oil with powders of earthworm excrement with a particle size of 150-200 mesh to absorb the fish oil into the powders, subjecting the mixture to reaction at least 30 °C or higher for 0.5-1 hour, bleaching the fish oil absorbed into the earthworm excrement powders by use of activated clay, and filtering the bleached fish oil through a filter; and deodorizing the bleached and filtered fish oil at a predetermined temperature for a period of time under a steam atmosphere in a high vacuum, deodorizing apparatus, cooling and filtering the deodorized fish oil, and packaging the fish oil in a closed vessel.

In one aspect of the embodiment, the mixture comprises 100 % by weight of fish oil, 50-70 % by weight of water, and 10-30 % by weight of the MSG by-product, based on the weight of the fish oil.

In another aspect of the embodiment, the urea is added at an amount of 0.5-2.0 % by weight based on the weight of the fish oil.

In a further aspect of the embodiment, the earthworm excrement powders are added at an amount of 0.2-0.5 % by weight based on the weight of the fish oil.

In still another aspect of the embodiment, the earthworm excrement powders are prepared by collecting earthworm excrements from the soil surface of an earthworm-breeding farm, drying the collected earthworm excrements to a moisture extent of 7-8 %, and pulverizing the dried earthworm excrements into powders.

### Brief Description of the Drawing

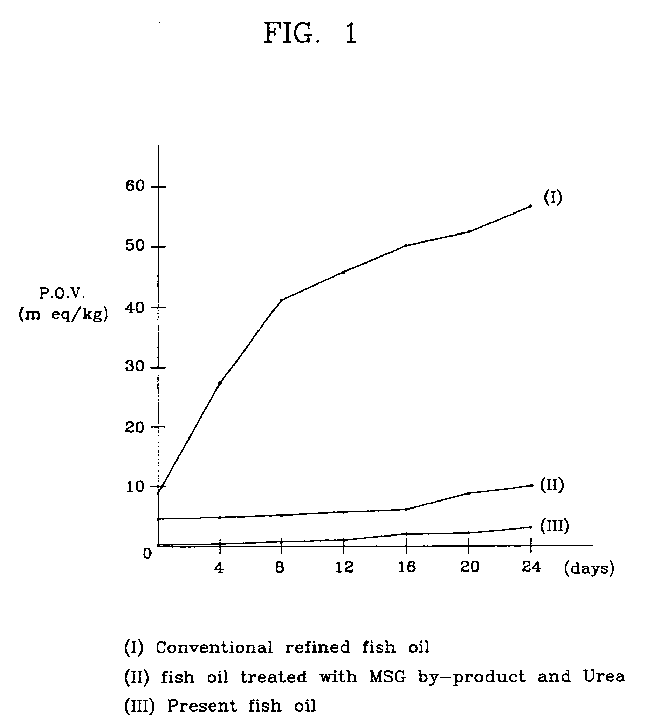

Fig. 1 is a graph showing the peroxide value (POV) changes of the fish oils processed according to conventional methods and the present invention with regard to the time period of the storage life of fish oils.

### Best Mode for Carrying Out the Invention

The present invention may be understood more readily by reference to the following detailed description of preferred embodiments of the invention and the figures.

Before the present method for manufacturing refined fish oil is disclosed or described, it is to be understood that the terminology used herein is for the purpose of describing particular embodiments only and is not intended to be limiting. It must be noted that, as used in the specification and the appended claims, the singular forms "a", "an" and "the" include plural referents unless the context clearly dictates otherwise.

### First Process

This process is conducted in a similar manner to the first and the second step described in U.S. Pat. No. 5,693,358 which discloses an animal feed manufacturing method based on fish oil.

Based on the weight of fish oil to be processed, 50-70 % by weight of water and 10-30 % by weight of an MSG by-product are mixed with the fish oil, and the mixture is gradually heated to 20-40 °C with stirring. To the mixture, urea is added at an amount of 0.5-2.0 % by weight based on the weight of the fish oil, followed by fermentation at 40-60 °C. 3-6 hours after the fermentation, the mixture is further processed with steam at 90-95 °C and water and phospholipids are separated from the fish oil in a centrifuge. The added urea serves as a catalyst which accelerates the transposition process in which the oil-soluble phospholipids of fish oil is converted into water-soluble ones as a result of reacting with the water-soluble proteins of the MSG by-product.

### Second Process

The fish oil separated is measured for acid value, neutralized with NaOH, and deprived of soap components. Free alkali contained in the deaciding fish oil is removed by washing with warm water. Thereafter, the fish oil is dried under vacuum.

### Third Process

To the completely dried fish oil of the Second Process, powder (particle size 150-200 mesh) of earthworm excrement is added at an amount of 0.2-0.5 % by weight based on the weight of the fish oil. Stirring at 30-40 °C of the mixture makes the fish oil absorbed into the excrement powder. After 0.5-1 hour, the fish oil-absorbed earthworm excrement powder is mixed with activated clay to absorb the pigment and color material followed by filtering through a filter.

The preparation of the powder of earthworm excrements is conducted as follows: first, the excrements of earthworms are dried. The excrements can be obtained by collecting from the soil surface of earthworm-breeding farms. The drying is conducted to the extent that the moisture content of the collected excrements is reduced from about 30 % to 7-8 %. Subsequently, the dried earthworm excrements are pulverized into powders.

### Fourth Process

In a well-known high vacuum, deodorizing apparatus, the bleached and filtered fish oil is subjected to deodorization at 160-180 °C for 4-8 hours under a steam pressure of 3 kg/cm². During this procedure, the unsaturated low fatty acids are removed by distillation from the fish oil. After being rapidly cooled in the same vacuum level to remove water, the fish oil is stored in a closed vessel which is then filled with nitrogen gas to improve the life span of the fish oil.

The refined oil prepared above may be packaged in individual units which are suitable for use immediately. The filling of nitrogen gas in the individual packages renders the refined oil to be kept fresh for a relatively long period of time. Of course, storing in a refrigerator is also helpful in keeping the fish oil fresh for an extended period of time.

For various fishes, a measurement was made of qualities of the fish oil obtained according to the First to the Fourth Process above and the results are given in Tables 1 to 4, below. For instance, sardine oil was greatly improved from 3.79 to 0.47 mg KOH/g in acid value, from 9.29 to 1.24 meq/kg in peroxide value (POV), and from 10⁺ to 3⁺ Gardner in color, as shown in Table 1.

**TABLE 1**

| Sardine Fish Oil | | |
|---|---|---|
| Properties | Crude Fish Oil | Refined Fish Oil |
| Acid Value (mg KOH/g) | 3.79 | 0.47 |
| P.O.V. (m eq/kg) | 9.29 | 1.24 |
| color (Gardner) | 10⁺ | 3⁺ |
| D.H.A(C_{22:6}) | 11.83 | 11.63 |
| E.P.A(C_{20:5}) | 19.05 | 18.62 |

**TABLE 2**

| Squid Liver Oil | | |
|---|---|---|
| Properties | Crude Fish Oil | Refined Fish Oil |
| Acid Value (mg KOH/g) | 23.07 | 0.12 |
| P.O.V. (m eq/kg) | 12.25 | 0.09 |
| color (Gardner) | 11⁺ | 4⁺ |
| D.H.A(C_{22:6}) | 24.15 | 23.65 |
| E.P.A(C_{20:5}) | 10.64 | 10.92 |

**TABLE 3**

| Tuna Orbic Tissue Oil (From Thailand) | | |
|---|---|---|
| Properties | Crude Fish Oil | Refined Fish Oil |
| Acid Value (mg KOH/g) | 3.56 | 0.17 |
| P.O.V. (m eq/kg) | 7.08 | 0.73 |
| color (Gardner) | 9⁺ | 4⁺ |
| D.H.A(C_{22:6}) | 27.72 | 27.14 |
| E.P.A(C_{20:5}) | 6.42 | 6.89 |

**TABLE 4**

| Tuna Orbic Tissue Oil (from DongWon Industries, Korea) | | |
|---|---|---|
| Properties | Crude Fish Oil | Refined Fish Oil |
| Acid Value (mg KOH/g) | 2.06 | 0.29 |
| P.O.V. (m eq/kg) | 3.57 | 0.65 |
| color (Gardner) | 7⁺ | 3⁺ |
| D.H.A(C_{22:6}) | 29.28 | 28.90 |
| E.P.A(C_{20:5}) | 9.93 | 9.84 |

With reference to Fig. 1, there is a graph in which POV are plotted with regard to a time period of the storage life of sardine oils refined according to various techniques.

In the graph, the POV changes of a conventional refined sardine oil, the refined sardine oil obtained after the first and the second step of U.S. Pat. No. 5,693,358, and the refined sardine oil of the present invention are represented by curves I, II and III, respectively.

When tracing Curve II, the POV of the sardine oil obtained according to the U.S. Pat. No. 5,693,358 was 4.2 meq/kg just after refinement and was increased to 8.5 meq/kg after a lapse of 20 days at 60 °C. In contrast, the sardine oil obtained according to the present invention showed a POV of 1.24 meq/kg just after refinement and the POV was increased only to as low as about 2.5 meq/kg after a lapse of 20 days at the same condition. Therefore, the fish oil refined according to the present invention can be preserved freshly for a relatively longer period of time than conventional ones.

As described hereinbefore, the present invention provides refined fish oil which is almost completely deodorized by removing phospholipids from fish oil, absorbing the fish oil into powdered earthworm excrements, bleaching the mixture with activated clay and filtering the mixture.

The fish oil refined according to the method of the present invention is significantly lowered in acid value and POV compared with crude oil. 20 days after the refinement, the POV of fish oil remains as low as 2.5 or less, so that a great improvement can be brought about in the stability and preservation ability.

The present invention has been described in an illustrative manner, and it is to be understood that the terminology used is intended to be in the nature of description rather than of limitation. Many modifications and variations of the present invention are possible in light of the above teachings. Therefore, it is to be understood that within the scope of the appended claims, the invention may be practiced otherwise than as specifically described.

## Claims

1. A method for manufacturing refined fish oil, which method comprising the steps of:
preparing phospholipid-deprived fish oil by mixing fish oil with water and a monosodium glutamate (MSG) by-product with stirring at a heated temperature, fermenting the mixture at an elevated temperature for a period of time in the presence of urea, processing the mixture with steam, and centrifuging the mixture to separate water and phospholipids from the fish oil, said urea serving as a catalyst;
measuring acid value of the separated fish oil to neutralize the fish oil with NaOH, washing the de-acidified fish oil with warm water, and drying the washed fish oil in vacuum;
mixing the dehydrated fish oil with powders of earthworm excrement with a particle size of 150-200 mesh to absorb the fish oil into the powders, subjecting the mixture to reaction at least 30 °C or higher for 0.5-1 hour, bleaching the fish oil absorbed into the earthworm excrement powders by use of activated clay, and filtering the bleached fish oil through a filter; and
deodorizing the bleached and filtered fish oil at a predetermined temperature for a period of time under a steam atmosphere in a high vacuum, deodorizing apparatus, cooling and filtering the deodorized fish oil, and packaging the fish oil in a closed vessel.

2. A method as set forth in claim 1, wherein the mixture comprises 100 % by weight of fish oil, 50-70 % by weight of water, and 10-30 % by weight of the MSG by-product, based on the weight of the fish oil.

3. A method as set forth in claim 1, wherein the urea is added at an amount of 0.5-2.0 % by weight based on the weight of the fish oil.

4. A method as set forth in claim 1, wherein the earthworm excrement powders are added at an amount of 0.2-0.5 % by weight based on the weight of the fish oil.

5. A method as set forth in claim 1, wherein the earthworm excrement powders are prepared by collecting earthworm excrements from the soil surface of an earthworm-breeding farm, drying the collected earthworm excrements to a moisture extent of 7-8 %, and pulverizing the dried earthworm excrements into powders.

6. A method as set forth in claim 1, wherein the deodorizing step is conducted by heating the bleached and filtered fish oil at 160-180 °C for 4-8 hours in a steam pressure of 3 kg/cm² or less.

7. A method as set forth in claim 1, wherein the closed vessels are filled with nitrogen gas.

8. A method as set forth in claim 1, wherein the fermentation is conducted at 40-60 °C for 3-6 hours in the presence of urea and the processing with steam is conducted at 90-95 °C.

## Patentansprüche

1. Verfahren zur Herstellung von raffiniertem Fischöl, umfassend die Schritte:
Herstellen von Fischöl, dem Phospholipide entzogen sind, durch Mischen von Fischöl mit Wasser und einem Mononatriumglutamat(MNG)-Nebenprodukt unter Rühren bei einer erhöhten Temperatur, Fermentieren der Mischung bei einer erhöhten Temperatur für eine Zeitdauer in der Anwesenheit von Harnstoff, Verarbeiten der Mischung mit Dampf und Zentrifugieren der Mischung, um Wasser und Phospholipide vom Fischöl abzutrennen, wobei der Harnstoff als Katalysator dient;
Messen des Säurewertes des abgetrennten Fischöls, um das Fischöl mit NaOH⁻ zu neutralisieren, Waschen des entsäuerten Fischöls mit warmem Wasser und Trocknen des gewaschenen Fischöls im Vakuum;
Mischen des entwässerten Fischöls mit Pulver von Regenwurmausscheidungen mit einer Teilchengröße von 100 bis 200 Mesh, um das Fischöl in das Pulver zu absorbieren, Unterwerfen der Mischung einer Reaktion bei wenigstens 30 °C oder mehr für 0,5-1 Stunde, Bleichen des in das Regenwurmausscheidungspulver absorbierten Fischöls unter Verwendung von aktiviertem Ton und Filtern des gebleichten Fischöls durch ein Filter; und
Deodorieren des gebleichten und gefilterten Fischöls bei einer vorbestimmten Temperatur für eine Zeitdauer unter einer Dampfatmosphäre in einer Hochvakuumdeodorierungsvorrichtung, Kühlen und Filtern des deodorierten Fischöls und Verpacken des Fischöls in ein geschlossenes Gefäß.

2. Verfahren gemäß Anspruch 1, wobei die Mischung 100 Gew.-% Fischöl, 50-70 Gew.-% Wasser und 10-30 Gew.-% des MNG-Nebenproduktes, basierend auf dem Gewicht des Fischöls, umfasst.

3. Verfahren gemäß Anspruch 1, wobei der Harnstoff in einer Menge von 0,5-2,0 Gew.-% hinzugefügt wird, basierend auf dem Gewicht des Fischöls.

4. Verfahren gemäß Anspruch 1, wobei das Regenwurmausscheidungspulver in einer Menge von 0,2-0,5 Gew.-% hinzugefügt wird, basierend auf dem Gewicht des Fischöls.

5. Verfahren gemäß Anspruch 1, wobei das Regenwurmausscheidungspulver hergestellt wird durch Sammeln von Regenwurmausscheidungen von der Erdoberfläche einer Regenwurmzuchtfarm, Trocknen der gesammelten Regenwurmausscheidungen bis zu einem Feuchtigkeitsgehalt von 7-8 % und Pulverisieren der getrockneten Regenwurmausscheidungen zu einem Pulver.

6. Verfahren gemäß Anspruch 1, wobei der Deodorierungssschritt durchgeführt wird, indem das gebleichte und gefilterte Fischöl bei 160-180 °C für 4-8 Stunden bei einem Dampfdruck von 3 kg/cm² oder weniger erhitzt wird.

7. Verfahren gemäß Anspruch 1, wobei die geschlossenen Gefäße mit Stickstoffgas gefüllt werden.

8. Verfahren gemäß Anspruch 1, wobei die Fermentation bei 40-60 °C für 3-6 Stunden in der Anwesenheit von Harnstoff durchgeführt wird, und die Verarbeitung mit Dampf bei 90-95 °C durchgeführt wird.

## Revendications

1. Procédé pour la production d'une huile de poisson raffinée, procédé comprenant les étapes consistant :
à préparer une huile de poisson privée de phospholipides en mélangeant une huile de poisson à de l'eau et un sous-produit du glutamate monosodique (MSG) sous agitation à une température de chauffage, à faire fermenter le mélange à une température élevée pendant une période de temps en présence d'urée, à traiter le mélange avec de la vapeur d'eau, et à centrifuger le mélange pour séparer l'eau et les phospholipides de l'huile de poisson, ladite urée servant de catalyseur ;
à mesurer l'indice d'acide de l'huile de poisson séparée pour neutraliser l'huile de poisson avec NaOH, à laver avec de l'eau chaude l'huile de poisson désacidifiée et à sécher sous vide l'huile de poisson lavée ;
à mélanger l'huile de poisson déshydratée avec des poudres d'excréments de vers de terre ayant un diamètre de particules correspondant aux mailles des tamis n° 150 à 200 pour que les poudres absorbent l'huile de poisson, à soumettre le mélange à une réaction au moins égale ou supérieure à 30°C pendant un temps de 0,5 à 1 heure, à faire blanchir l'huile de poisson absorbée par la poudre d'excréments de vers de terre en utilisant une argile activée, et à filtrer l'huile de poisson blanchie à travers un filtre ; et
à désodoriser l'huile de poisson blanchie et filtrée à une température prédéterminée pendant une période de temps sous une atmosphère de vapeur d'eau dans un appareil de désodorisation sous vide poussé, à refroidir et filtrer l'huile de poisson désodorisée et à conditionner l'huile de poisson dans un récipient clos hermétiquement.

2. Procédé suivant la revendication 1, dans lequel le mélange comprend 100 % en poids d'huile de poisson, 50 à 70% en poids d'eau et 10 à 30 % en poids du sous-produit de MSG, sur la base du poids de l'huile de poisson.

3. Procédé suivant la revendication 1, dans lequel l'urée est ajoutée en une quantité de 0,5 à 2,0 % en poids sur la base du poids de l'huile de poisson.

4. Procédé suivant la revendication 1, dans lequel les poudres d'excréments de vers de terre sont ajoutées en une quantité de 0,2 à 0,5 % en poids sur la base du poids de l'huile de poisson.

5. Procédé suivant la revendication 1, dans lequel les poudres d'excréments de vers de terre sont préparées en recueillant des excréments de vers de terre à la surface du sol d'une ferme d'élevage de vers de terre, en séchant les excréments de vers de terre recueillis à une teneur en humidité de 7 à 8 % et en pulvérisant les excréments de vers de terre séchés sous forme de poudres.

6. Procédé suivant la revendication 1, dans lequel l'étape de désodorisation est effectuée en chauffant l'huile de poisson blanchie et filtrée à une température comprise dans l'intervalle de 160 à 180°C pendant un temps de 4 à 8 heures à une pression de vapeur d'eau égale ou inférieure à 3 kg/cm².

7. Procédé suivant la revendication 1, dans lequel les récipients clos hermétiquement sont remplis d'azote gazeux.

8. Procédé suivant la revendication 1, dans lequel la fermentation est effectuée à une température comprise dans l'intervalle de 40 à 60°C pendant un temps de 3 à 6 heures en présence d'urée et le traitement avec de la vapeur d'eau est effectué à une température comprise dans l'intervalle de 90 à 95°C.
